# EUROPEAN PATENT SPECIFICATION

(11) **EP 1 612 259 B1**
(45) Date of publication and mention of the grant of the patent: **02.05.2007**
(21) Application number: 04078463.9
(22) Date of filing: 20.12.2004
(51) Int. Cl.: C11B 1/00, A23N 1/00, A23N 1/02, B04B 5/04

(54) **System for the extraction of the liquid component from drupes mounted on the surface of a means**
System für die Extraktion einer Flüssigkomponente von Steinfrüchten, das auf der Oberfläche einer Vorrichtung montiert ist
Système pour l'éxtraction du composent liquide des fruits à noyeaux monté sur la surface d'un dispositif

(30) Priority: 01.07.2004 IT RE20040076
(43) Date of publication of application: 04.01.2006
(73) Proprietor: Ing. Bonfiglioli S.p.A., 40050 Castello d'Argile (Bologna) (IT)
(72) Inventor: Bonfiglioli, Giancarlo c/o Ing. Bonfiglioli S.P.A, 40050 Castello d'Argile (Bologna) (IT)
(74) Representative: Corradini, Corrado

(56) References cited:
- EP-A- 0 557 758
- EP-A- 1 570 754
- EP-A- 1 570 755
- CH-A- 303 668

## Description

The present invention refers to an improved system for the extraction of the liquid component from drupes, suitable for being entirely housed on a trailer that hooks onto a motor vehicle, in accordance with the preamble of claim 1.

Plants, known as oil mills, for producing olive oil through their milling are known.

Nowadays, the production of oil from olives is carried out with continuous plants in which the olives are stoned to obtain a paste from them.

Thereafter, the paste is pushed to the kneader and from here to a horizontal centrifuge, known as a decanter, which extracts the oil from the olive paste.

Lastly, the liquid component coming out from the decanter and known as oily must is sent towards a vertical centrifuge for the separation of oil from the water.

The use of a plant positioned on the surface of a trailer, as described in patent application RE2004A000014 to the same Applicant, in order to limit bulk, conserving the high production capacity typical of fixed plants, has some drawbacks and disadvantages regarding the positioning of the vertical centrifuge for the separation of the oil from the water.

Indeed, should the centrifuge not have its axis positioned correctly vertically the centrifuge would operate badly, as known in the field.

This occurs above all when the trailer on which the entire plant is housed is positioned on a slope, for example, due to the slope of the ground below.

Therefore, there is a strong requirement to have a system for the extraction of the liquid component from drupes mounted on the surface of a means that is improved allowing the axis of the centrifuge to remain vertical even on sloping ground.

The purpose of the present invention is that of providing an improved system for the extraction of the liquid component from drupes mounted on the surface of a means having structural and functional characteristics such as to satisfy the aforementioned requirements and at the same time to avoid the aforementioned drawbacks with reference to the prior art.

Such a purpose is accomplished through a system for the extraction of the liquid component from drupes mounted on the surface of a means in accordance with claim 1.

The dependent claims outline preferred and particularly advantageous embodiments of the system according to the invention.

Further characteristics and advantages of the invention shall become clear from reading the following description provided as an example and not for limiting purposes, with the help of the figures illustrated in the attached tables, in which:
- figure 1 shows a schematic side view of the improved system for the extraction of the liquid component from drupes in accordance with a first embodiment of the present invention;
- figure 2 shows a view from above of a detail of the system of figure 1;
- figure 3 shows a side view of a detail of the system of figure 1;
- figure 4 shows a side view of a detail of the present invention, in accordance with a second embodiment;
- figure 5 shows a side view of a detail of the present invention, in accordance with a third embodiment;
- figure 6 shows a detail taken along the line VI-VI of figure 5;

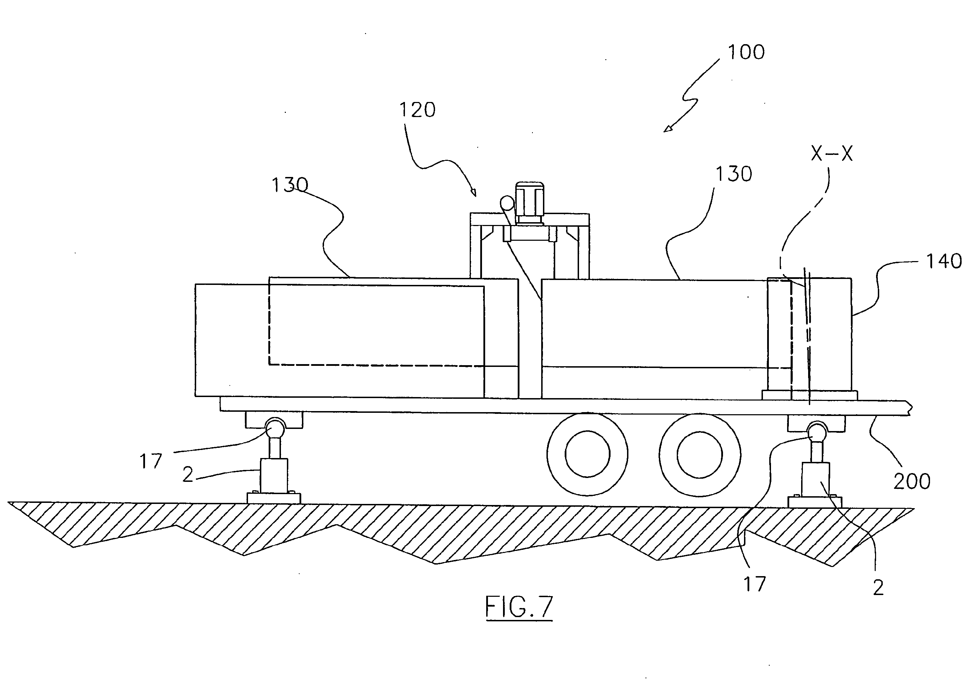

- figure 7 shows a side view of the system of the present invention, in accordance with a fourth embodiment.

With reference to the aforementioned figures, a system for the extraction of the liquid component from drupes mounted on a surface 200 of a means is globally indicated with 100.

Hereafter, the components of a plant for producing olive oil shall not be described in detail since they are already known in the field.

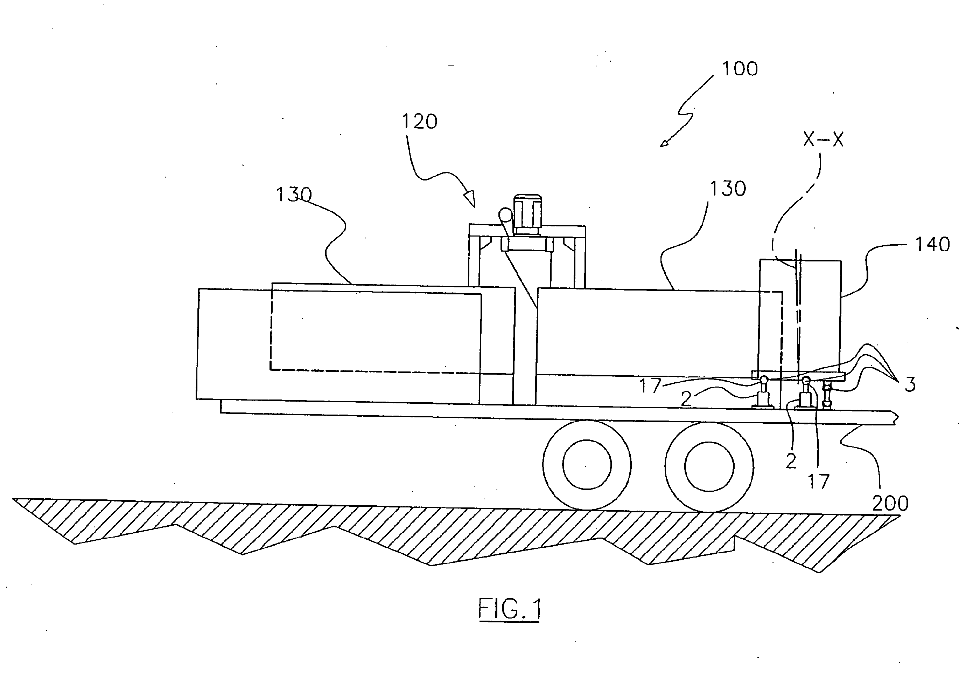

To be extremely brief, the system 100 for producing olive oil arranged on the surface 200 comprises a cylinder oil mill 120, a kneader 130, a decanter 150 and a centrifugal separator 140 (or simply a centrifuge), as schematised in figure 1.

Said centrifugal separator 140 has its rotation axis X-X extending vertically and allows the oil to be separated from the water on the principle of the separation of different substances by specific weight, in a field of centrifugal forces.

In order to allow versatile use of the system 100, for example, on a slope, it is foreseen, in accordance with some embodiments of the present invention, to use a platform 1 with adjustable orientation, placed between the centrifugal separator 140 and the surface 200, suitable for placing the rotation axis X-X of the centrifugal separator 140 in vertical position irrespective of the inclination of the surface 200 through positioning means which shall be discussed hereafter.

The platform 1 is positioned above the surface 200 without, however, touching it and is articulated through at least three articulations 3, such as articulated joints, distal with respect to each other of which at least two are vertically adjustable through said positioning means which shall be discussed hereafter.

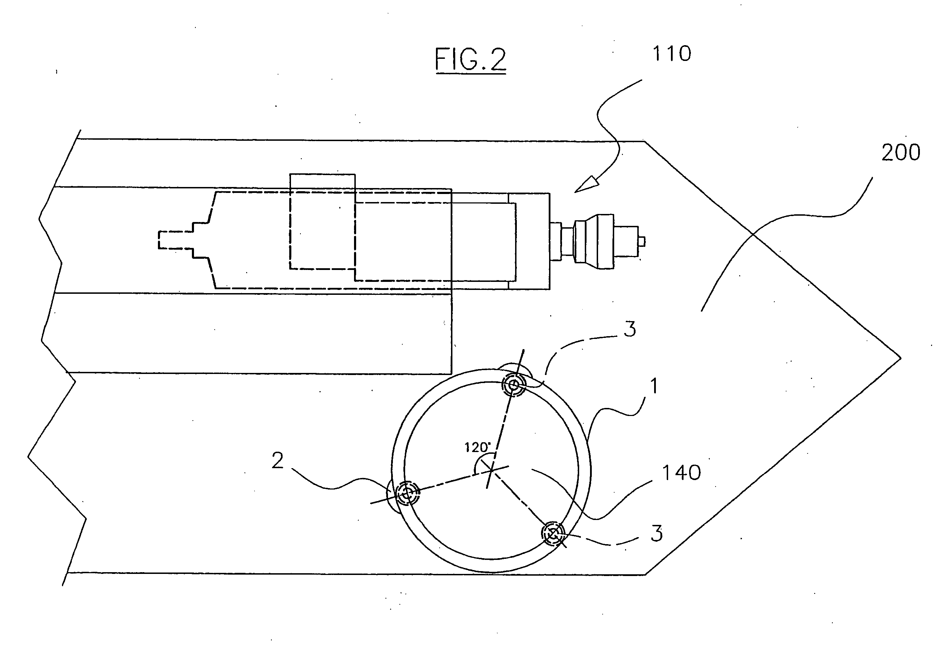

In the example (fig. 2), the platform 1 has a circular configuration and the articulated joints 3 about which the platform 1 is adjustable are arranged at the circumferential edge of the platform spaced apart by about 120°.

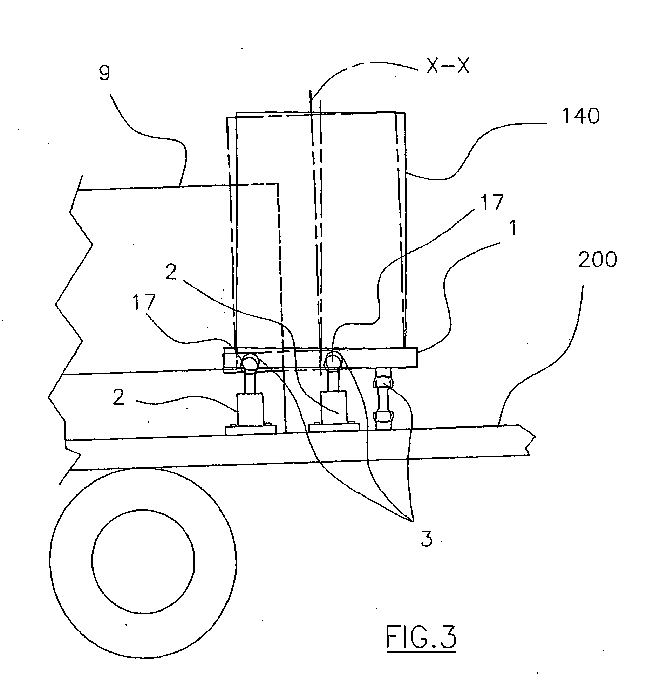

In accordance with a first embodiment of the present invention, illustrated in figures 1 and 3, said positioning means comprise a cylinder-piston group 2 fixed at one end to the surface 200 and at the other end to the platform 1 through the interposition of an articulated joint 17.

Said cylinder-piston group 2 acts on the corresponding articulated joint 3, in the example in a number equal to two.

Of course, it is possible for all three of the articulated joints 3 to be vertically adjustable through a cylinder-piston group 2.

Basically, by actuating the two cylinder-piston groups 2 according to the prior art, the stems act on the platform 1 determining an oscillation thereof about the remaining articulated joint 3 until the perfect vertical positioning of the rotation axis X-X of the centrifugal separator 140 is reached.

In a second embodiment of the present invention, said positioning means comprise a shaft 5 extending horizontally and supported at the two ends by a pair of sleeves 6 inside of which it is free to rotate.

At least a portion of said shaft 5 is provided with a threading with which a volute 7 is coupled.

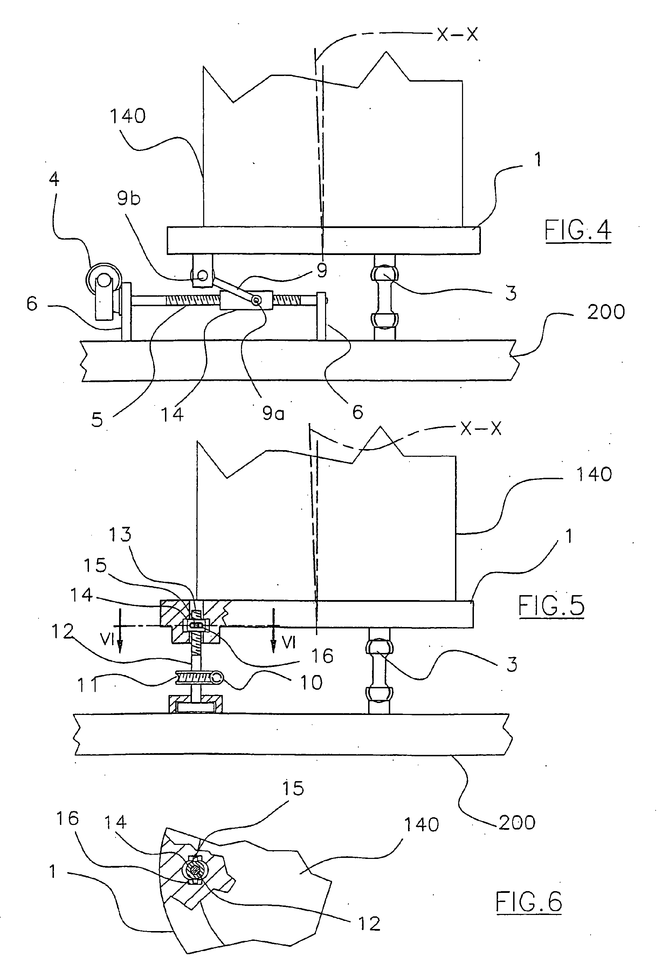

Said volute 7 has an end 9a of a rigid lever 8 associated with it in articulation through a rotation pin, said rigid lever having the other end 9b articulated to the edge of the platform 1 (fig. 4).

In virtue of such an arrangement, the volute 7 carries out an excursion along the shaft 5, when it is placed in rotation.

The direction of advance of the volute 7 is given by the direction of rotation of the shaft 5.

Basically, when the shaft 5 rotates in a certain direction of rotation, the volute 7 carries out a translation along the shaft 5 pulling the lever 8 hinged to it along with it.

The movement along the axis of the shaft 5 of the lever 8 causes the oscillation of the platform 1 about the remaining articulated joint 3 allowing the slope of the platform itself to be adjusted.

The rotation of the shaft 5 can be carried out manually through a crank or else through motor means 4, as illustrated in figure 4, suitable for placing the shaft 5 in rotation.

According to a third preferred embodiment of the present invention, illustrated in figure 5, said positioning means comprise a worm screw 10 suitable for actuating a helical wheel 11.

Said wheel 11 is fitted centrally to a shaft 12 extending vertically with respect to the plane of the surface 200.

In the example, the vertical shaft 12 is rested through means of the prior art, such as a fifth wheel 18, free to rotate on the surface itself.

At least a portion 13 of the shaft 12, in the example the upper end, is provided with an outer threading.

Said threaded portion 13 screws into a bush 14 fixed inside the platform 1 coaxially to the shaft 12.

Operatively, the rotation of the worm screw 10, carried out manually or else through motor means of the prior art, causes the rotation of the helical wheel 11 and therefore of the shaft 12 fitted to it.

This causes the translation movement, along the axis of the vertical shaft 12, of the bush 14 and therefore of the entire platform 1 until it is positioned in the desired position.

In order to allow large oscillations of the platform 1, the bush 14 can be provided with a pair of projecting elements 15 integral with the bush 14 arranged on the outside and opposite one another (fig. 6).

Said projecting elements 15 are free to slide inside a respective slot 16 extending horizontally formed in the platform 1 in order to allow a certain translation of the bush 14 inside the platform 1.

The system 100 of the present invention can be equipped with suitable sensors of perfect horizontal arrangement of the platform 1 and therefore vertical arrangement of the axis X-X of the centrifuge 140 that control the stopping point of the positioning means.

Moreover, it is possible to use said positioning means in a number greater than two for each platform 1, for example, arranged 120° apart on the circumferential edge replacing the remaining non-adjustable articulated joint. According to a fourth embodiment of the present invention, the positioning means are placed between the underlying ground and the surface 200 without the help of any platform.

Basically, the centrifugal separator 140 is directly arranged on the surface 200 and the positioning means ensure the flatness of the surface and therefore the vertical arrangement of the rotation axis X-X.

In the example of figure 6, three cylinder-piston groups 2 are removably fixed at one end to the ground and at the other end to the surface 200 through an articulated joint 17 in distal positions with respect to each other.

As can be appreciated from that which has been described, the improved system for the extraction of the liquid component from drupes according to the present invention allows the requirements to be satisfied and the drawbacks mentioned in the introductory part of the present description to be overcome.

Indeed, the system according to the present invention can be transported directly from the site where the olives are collected and can even be used on sloping terrain.

Of course, a man skilled in the art can bring numerous modifications and variants in order to satisfy contingent and specific requirements, all of which are covered by the scope of protection of the invention, as defined by the following claims.

## Claims

1. System (100) for the extraction of the liquid component from drupes mounted on the surface (200) of a means, said system (100) comprising a cylinder oil mill (120) suitable for crushing the drupes to obtain a paste from them; at least one kneader (130) for the homogenisation of the paste coming from the cylinder oil mill (120); a decanter (150) for the extraction of the liquid component from the homogenised paste coming from the kneader (130), a centrifugal separator (140) with a vertical rotation axis (X-X), said system (100) being arranged on a surface (200) of a rotatable means,
**characterised in that**
it comprises positioning means (2; 5, 7, 8; 10, 11, 12) suitable for placing the rotation axis (x-X) of said centrifugal separator (140) in vertical position irrespective of the inclination of the surface (200).

2. System (100) according to claim 1, wherein said positioning means (2; 5, 7, 8; 10, 11, 12) act between a platform (1) with adjustable orientation on which said centrifugal separator (140) is arranged and the surface (200) with which said platform (1) is associated through the interposition of at least three articulations (3) that are distal with respect to each other of which at least two are vertically adjustable through said positioning means (2; 5, 7, 8; 10, 11, 12).

3. System (100) according to claim 2, wherein said positioning means comprise at least one cylinder-piston group (2) fixed at one end to said surface (200) and at the other end to said platform (1) through an articulated joint (17).

4. System (100) according to claim 2, wherein said positioning means comprise a shaft (5) extending horizontally supported at the two ends by a pair of sleeves (6) inside which it is free to rotate, at least a portion of said shaft (5) being provided with a threading on which a volute (7) is coupled with which an end (9a) of a rigid lever (9) is associated, said lever having the other end (9b) coupled in a distal position from said articulations (3) to said platform (1).

5. System (100) according to claim 2, wherein said positioning means comprise a worm screw (10) suitable for actuating a helical wheel (11) fitted centrally to a shaft (12) extending vertically and perpendicular to the surface (200), at least a portion of the shaft (12) being provided with an outer threading that screws into a bush (14) fixed inside the platform (1) coaxial to said vertical shaft (12).

6. System (100) according to claim 5, wherein said bush (14) is provided with a pair of opposite projecting elements (15) that are free to slide inside a respective slot (16) formed in said platform (1).

7. System (100) according to claim 2, wherein said three articulations (3) are arranged perimetrically to said platform (1) a distance of about 120° apart.

8. System (100) according to claim 1, wherein said positioning means (2; 5, 7, 8; 10, 11, 12) act directly on said surface (200).

9. System (100) according to claim 8, wherein said positioning means comprise three cylinder-piston groups (2) removably fixed at one end to the ground and at the other end to said surface (200) through an articulated joint (17) in a distal position with respect to each other.

## Patentansprüche

1. System (100) für die Extraktion des Flüssigkeitsbestandteils von Steinfrüchten, die auf der Oberfläche (200) einer Einrichtung angebracht sind, wobei das System (100) eine Zylinderölmühle (120), die zur Zerkleinerung der Steinfrüchte geeignet ist, um eine Paste aus denselben zu erhalten; mindestens eine Knetvorrichtung (130) zur Homogenisierung der aus der Zylinderölmühle (120) kommenden Paste; eine Karaffe (150) zur Extraktion des Flüssigkeitsbestandteiles von der aus der Knetvorrichtung (130) kommenden Paste und einen Fliehkraftabscheider (140) mit einer vertikalen Drehachse (X-X) aufweist, wobei das System (100) auf einer Oberfläche (200) einer drehbaren Einrichtung angeordnet ist,
**dadurch gekennzeichnet , dass**
es Positionierungseinrichtungen (2;5,7,8;10,11,12) aufweist, die geeignet sind, die Drehachse (x-X) des Fliehkraftabscheiders (140) unabhängig von der Neigung der Oberfläche (200) (in einer Vertikalstellung) zu positionieren.

2. System (100) nach Anspruch 1,
**dadurch gekennzeichnet , dass**
die Positionierungseinrichtungen (2;5,7,8;10,11,12) zwischen einer Plattform (1) mit einstellbarer Ausrichtung, worauf der Fliehkraftabscheider (140) angeordnet ist, und der Oberfläche (200) wirken, mit welcher die Plattform durch die Zwischenschaltung von mindestens drei Gelenken (3) verbunden ist, die im Verhältnis zueinander distal sind, wovon mindestens zwei durch die Positionierungseinrichtungen (2;5,7,8;10,11,12) einstellbar sind.

3. System (100) nach Anspruch 2,
**dadurch gekennzeichnet , dass**
die Positionierungseinrichtungen mindestens eine Zylinder-Kolben-Gruppe (2) aufweisen, die an einem Ende an der Oberfläche (200), und an dem anderen Ende durch eine Gelenkverbindung (17) an der Plattform (1) befestigt ist.

4. System (100) nach Anspruch 2,
**dadurch gekennzeichnet , dass**
die Positionierungseinrichtungen eine sich horizontal erstreckende Welle (5) umfassen, die an den zwei Enden mittels eines Paares von Hülsen (6) getragen ist, innerhalb welcher sie frei drehbar ist, wobei mindestens ein Abschnitt der Welle (5) mit einem Gewinde versehen ist, worauf ein Spiralgehäuse (7) befestigt ist, mit dem ein Ende (9a) eines starren Hebels (9) verbunden ist, wobei das andere Ende (9b) des Hebels in einer distalen Position von den Gelenken (3) mit der Plattform (1) verbunden ist.

5. System (100) nach Anspruch 2,
**dadurch gekennzeichnet , dass**
dass die Positionierungseinrichtungen eine Schneckenschraube (10) umfassen, die zur Betätigung eines schraubenförmigen Rades (11) geeignet ist, welches zentral an einer sich vertikal und senkrecht zu der Oberfläche (200) erstreckenden Welle (12) angebracht ist, wobei mindestens ein Abschnitt der Welle (12) mit einem Außengewinde versehen ist, welches in eine Buchse (14) eingeschraubt wird, die innerhalb der Plattform (1) koaxial zu der Vertikalwelle (12) befestigt ist.

6. System (100) nach Anspruch 5,
**dadurch gekennzeichnet , dass**
die Buchse (14) mit einem Paar einander gegenüberliegender hervorstehender Elemente (15) versehen ist, die frei sind, um innerhalb eines in der Plattform (1) ausgebildeten jeweiligen Schlitzes (16) zu gleiten.

7. System (100) nach Anspruch 2,
**dadurch gekennzeichnet , dass**
die drei Gelenke (3) umfangsmäßig an der Plattform (1) in einem Abstand von etwa 120° voneinander angeordnet sind.

8. System (100) nach Anspruch 1,
**dadurch gekennzeichnet, dass**
die Positionierungseinrichtungen (2;5,7,8;10,11,12) direkt auf die Oberfläche (200) wirken.

9. System (100) nach Anspruch 8,
**dadurch gekennzeichnet, dass**
die Positionierungseinrichtungen drei Zylinder-Kolben-Gruppen (2) umfassen, die an einem Ende entfernbar an dem Boden und an dem anderen durch eine Gelenkverbindung (17) in einer distalen Position im Verhältnis zueinander entfernbar an der Oberfläche (200) befestigt sind.

## Revendications

1. Système (100) d'extraction de la composante liquide de drupes montées à la surface (200) d'un dispositif, le système (100) comprenant un moulin (120) à huile à cylindre convenant à l'écrasement des drupes pour l'obtention à partir de celles-ci d'une pâte, au moins un malaxeur (130) destiné à l'homogénéisation de la pâte provenant du moulin (120) à huile à cylindre, un décanteur (150) pour l'extraction de la composante liquide de la pâte homogénéisée provenant du malaxeur (130), et un séparateur centrifuge (140) ayant un axe vertical de rotation (X-X), le système (100) étant disposé sur une surface (200) d'un dispositif rotatif,
**caractérisé en ce que**
il comporte un dispositif de positionnement (2 ; 5, 7, 8 ; 10, 11, 12) convenant à la disposition de l'axe de rotation (X-X) du séparateur centrifuge (140) en position verticale indépendamment de l'inclinaison de la surface (200).

2. Système (100) selon la revendication 1, dans lequel le dispositif de positionnement (2 ; 5, 7, 8 ; 10, 11, 12) agit entre une plate-forme (1) d'orientation réglable sur laquelle est monté le séparateur centrifuge (140) et la surface (200) à laquelle est associée la plate-forme (1) avec interposition d'au moins trois articulations (3) qui sont distantes les unes des autres dont deux au moins sont réglables verticalement à l'aide du dispositif de positionnement (2 ; 5, 7, 8 ; 10, 11, 12).

3. Système (100) selon la revendication 2, dans lequel le dispositif de positionnement comporte au moins un groupe à cylindre et piston (2) fixé, à une première extrémité, à la surface (200) et, à l'autre extrémité, à la plate-forme (1) par l'intermédiaire d'un joint articulé (17).

4. Système (100) selon la revendication 2, dans lequel le dispositif de positionnement comporte un arbre (5) qui est supporté horizontalement aux deux extrémités par une paire de manchons (6) dans lesquels il est libre de tourner, une partie au moins de l'arbre (5) ayant un filetage sur lequel est couplée une volute (7) à laquelle est associée une extrémité (9a) d'un levier rigide (9), le levier ayant son autre extrémité (9b) couplée, dans une position distante des articulations (3), à la plate-forme (1).

5. Système (100) selon la revendication 2, dans lequel le dispositif de positionnement comprend une vis rotative (10) convenant à la manoeuvre d'une roue en hélice (11) montée au centre sur un arbre (12) qui s'étend verticalement et perpendiculairement à la surface (200), une partie au moins de l'arbre (12) ayant un filetage qui se visse dans une douille (14) fixée dans la plate-forme (1) coaxialement à l'arbre vertical (12).

6. Système (100) selon la revendication 5, dans lequel la douille (14) a deux éléments opposés en saillie (15) qui sont libres de coulisser à l'intérieur d'une fente respective (16) formée dans la plate-forme (1).

7. Système (100) selon la revendication 2, dans lequel trois articulations (3) sont disposées au périmètre de la plate-forme (1) et sont espacées d'environ 120°.

8. Système (100) selon la revendication 1, dans lequel le dispositif (2 ; 5, 7, 8 ; 10, 11, 12) de positionnement agit directement sur ladite surface (200).

9. Système (100) selon la revendication 8, dans lequel le dispositif de positionnement comprend trois groupes à cylindre et piston (2) fixés de façon amovible à une première extrémité au sol et à l'autre extrémité à ladite surface (200) par l'intermédiaire d'un joint articulé (17) en positions distantes les unes des autres.
